# EUROPÄISCHE PATENTSCHRIFT

(11) **EP 2 203 078 B1**
(45) Veröffentlichungstag und Bekanntmachung des Hinweises auf die Patenterteilung: **27.12.2017**
(21) Anmeldenummer: 08802797.4
(22) Anmeldetag: 06.10.2008
(51) Int. Cl.: A41D 27/24, B29C 65/72, B29C 65/62, B29C 65/48

(54) **NAHTVERBINDUNGSSTRUKTUR, BEKLEIDUNGSSTÜCK MIT EINER NAHTVERBINDUNGSSTRUKTUR SOWIE VERFAHREN ZUR HERSTELLUNG EINER NAHTVERBINDUNGSSTRUKTUR**
STITCHED SEAM STRUCTURE, ITEM OF CLOTHING COMPRISING A STITCHED SEAM STRUCTURE AND METHOD FOR PRODUCING A STITCHED SEAM STRUCTURE
STRUCTURE DE COUTURE, VÊTEMENT PRÉSENTANT UNE STRUCTURE DE COUTURE AINSI QUE PROCÉDÉ DE RÉALISATION D'UNE STRUCTURE DE COUTURE

(30) Priorität: 19.10.2007 DE 102007050174
(43) Veröffentlichungstag der Anmeldung: 07.07.2010
(73) Patentinhaber: W.L. Gore & Associates GmbH, 85640 Putzbrunn (DE)
(72) Erfinder: STÜBIGER, Werner, 85579 Neubiberg (DE)
(74) Vertreter: Schmitt-Nilson Schraud Waibel Wohlfrom Patentanwälte Partnerschaft mbB
(86) Internationale Anmeldenummer: PCT/EP2008/008426
(87) Internationale Veröffentlichungsnummer: WO 2009/052937

(56) Entgegenhaltungen:
- EP-A- 0 199 472
- EP-A- 0 861 605
- GB-A- 2 071 564
- US-A- 5 885 679

## Beschreibung

Die vorliegende Erfindung betrifft eine Nahtverbindungsstruktur umfassend eine erste Materialbahn mit einer ersten Barrierelage und eine zweite Materialbahn mit einer zweiten Barrierelage und mit wenigstens einer Naht, welche in einem Nahtbereich die erste und zweite Materialbahn verbindet. Weiterhin betrifft die Erfindung ein Bekleidungsstück mit einer derartigen Nahtverbindungsstruktur, sowie ein Verfahren zur Herstellung einer derartigen Nahtverbindungsstruktur.

Bekleidungsstücke mit wasserdurchlässigem Obermaterial kann man dadurch wasserdicht machen, indem man auf der Innenseite des Obermaterials eine wasserdichte Schicht, allgemein als Barrierelage bezeichnet, anordnet. Um solche Bekleidungsstücke wasserdicht und dennoch wasserdampfdurchlässig und somit atmungsaktiv zu machen, wird im Allgemeinen typischerweise ein Obermaterial verwendet, das wasserdampfdurchlässig, jedoch auch wasserdurchlässig ist, und auf dessen Innenseite eine wasserdichte, wasserdampfdurchlässige Funktionsschicht (Barrierelage) angeordnet ist. Auf der zum Körper des Benutzers des Bekleidungsstücks weisenden Seite der Funktionsschicht ist meist eine textile Futterschicht angeordnet.

Es ist bekannt, für wasserdichte, wasserdampfdurchlässige Bekleidungsstücke ein Mehrlagenlaminat wie z. B. ein Zweilagenlaminat mit einer Funktionsschicht und einer Futterschicht oder auch ein Dreilagenlaminat mit einer Obermaterialschicht, einer Funktionsschicht und einer Textilschicht zu verwenden.

Es gibt Bekleidungsstücke, die aus mehreren Teilstücken zusammengenäht sind, um eine bestimmte Passform und/oder Festigkeit und/oder Haltbarkeit und/oder optische Erscheinung zu erzielen. Bei Verwendung von Mehrlagenlaminat der zuvor genannten Art, welches sowohl ein Obermaterial wie auch eine Funktionsschicht aufweist, werden einzelne Zuschnitt-Teile des Bekleidungsstücks aus Laminatbahnen herausgeschnitten und dann zu dem Bekleidungsstück verbunden, üblicherweise durch Vernähen. Damit werden im Allgemeinen zwei Laminatbahnen des Bekleidungsstücks durch eine Nähnaht in einem Nahtbereich miteinander verbunden. Durch eine solche Vernähung wird jedoch auch die Funktionsschicht des Laminats durchstoßen, so dass an der Nahtstelle die Wasserdichtigkeit der Funktionsschicht beeinträchtigt wird, so dass an der Nahtstelle unerwünschte Undichtigkeiten auftreten können. Um auch die Nahtstelle wasserdicht zu bekommen, d. h. um die Wasserdichtigkeit des Bekleidungsstücks insgesamt zu erhalten, ist es im Allgemeinen üblich, die Naht mit einer wasserdichten Nahtabdichtung zu bedecken, wobei die Nahtabdichtung durch ein separat aufgebrachtes Nahtband erfolgt, das seinerseits wasserdicht ist.

Eine derartige Anordnung ist insbesondere aus US 2005/0081281 A1 bekannt, wonach eine Nahtverbindung zwischen zwei Laminaten durch ein zusätzlich aufgebrachtes Nahtband abgedichtet wird. Das Aufbringen eines zusätzlichen Nahtbandes hat im Allgemeinen den Nachteil, dass die Dicke des Laminats an der Nahtverbindungsstelle erhöht wird, was den Tragekomfort des Bekleidungsstücks einschränken kann. In der genannten Druckschrift wird hierzu vorgeschlagen, dass wenigstens ein Teil des Textillaminats in dem abzudichtenden Bereich entfernt wird, z. B. durch Abschärfen, um die Dicke des Laminats in dem Nahtbereich zu reduzieren, bevor das Nahtband auf die Nahtstelle aufgebracht wird. Als ein Nachteil einer solchen Anordnung verbleibt jedoch, dass mit dem Aufbringen eines zusätzlichen Nahtbandes das Bekleidungsstück an der Nahtstelle vergleichsweise steif wird, was wiederum den Tragekomfort beeinträchtigt.

Verbindungsnähte, welche zur Nahtabdichtung durch ein Nahtband abgedichtet werden, sind meist recht steif, führen zu sichtbaren Nahtbandkantenabdrücken auf dem Obermaterialteil (sogenannte Oberware), insbesondere nach häufigem Waschen. Weiterhin unterbricht das Nahtband selbst oft die Durchgängigkeit des Innenmaterialteils (sogenannte Abseite) in Farbe oder Beschaffenheit. Das zusätzliche Nahtband bewirkt zudem eine Verdickung der Naht, insbesondere an Kreuz- und T-Stellen, wie oben bereits angedeutet.

In US 5 885 679 A ist eine andere Art einer Verbindungsstruktur für wasserdichte Textilmaterialien beschrieben, wonach zwei Materialbahnen in einem Nahtbereich miteinander verbunden werden, wobei hierzu eine der Materialbahnen im Nahtbereich umgelegt wird, so dass sich eine Wulstnaht ergibt. Sowohl in der durch Umlegen gebildeten Mulde dieser Materialbahn als auch an der Verbindungsstelle zwischen dieser Materialbahn und der anderen Materialbahn wird jeweils ein Schmelzkleber vorgesehen, so dass die einander überlappenden Lagen des Laminats im Nahtbereich miteinander verklebt werden. Die so geschaffene Nahtverbindung hat jedoch den Nachteil, dass eine der Nähte auf beiden Seiten der Nahtverbindung von außen zugänglich ist, so dass nach wie vor die Gefahr einer Undichtigkeit an der Nahtstelle besteht, beispielsweise wenn der Kleber über die Zeit oder durch häufiges Waschen porös wird oder Fehlstellen aufweist.

Der vorliegenden Erfindung liegt die Aufgabe zugrunde, eine Nahtverbindungsstruktur der eingangs genannten Art bereitzustellen, die dazu beiträgt, wasserdichte Funktionskleidung mit hohem Tragekomfort zu schaffen.

Die vorliegende Erfindung betrifft eine Nahtverbindungsstruktur mit den Merkmalen des Patentanspruchs 1. Weiterhin betrifft die Erfindung ein Bekleidungsstück mit einer derartigen Nahtverbindungsstruktur gemäß den Merkmalen des Patentanspruchs 25. Weiterhin betrifft die Erfindung ein Verfahren zur Herstellung einer Nahtverbindungsstruktur gemäß den Merkmalen des Patentanspruchs 27.

Die erfindungsgemäße Nahtverbindungsstruktur umfasst eine erste Materialbahn mit einer ersten Barrierelage und mit einem ersten Rand an einer äußeren Begrenzung der ersten Materialbahn, eine zweite Materialbahn mit einer zweiten Barrierelage und mit einem zweiten Rand an einer äußeren Begrenzung der zweiten Materialbahn und wenigstens eine Naht, welche in einem Nahtbereich die erste und zweite Materialbahn verbindet, unter Bildung einer ersten Nahtzugabe zwischen der Naht und dem ersten Rand der ersten Materialbahn und unter Bildung einer zweiten Nahtzugabe zwischen der Naht und dem zweiten Rand der zweiten Materialbahn. Hierbei sind die erste und die zweite Materialbahn in dem Nahtbereich übereinander angeordnet. Die zweite Nahtzugabe ist um den ersten Rand der ersten Materialbahn gefaltet und bedeckt die wenigstens eine Naht unter Bildung einer Nahtabdeckung. Hierbei ist die Nahtabdeckung im Nahtbereich mit der ersten Materialbahn verbunden.

Eine solche erfindungsgemäße Nahtverbindungsstruktur hat dabei den Vorteil, dass zur Herstellung einer wasserdichten Naht zwischen der ersten und zweiten Materialbahn kein separates Nahtband mehr erforderlich ist. Daraus ergibt sich zum einen eine Materialeinsparung bei der Herstellung eines Bekleidungsstücks und zum anderen eine Kostenreduzierung im Herstellungsprozess. Weiterhin kann der Nachteil vermieden werden, dass ein Farb- bzw. Materialunterschied zwischen einem solchen Nahtband und dem Abseitenmaterial des Bekleidungsstücks entsteht. Als weitere Vorteile ergeben sich eine höhere Reissfestigkeit gegenüber einer nur geklebten Naht, eine weichere Nahtverbindungsstelle und eine vergleichsweise dünne Naht, was wiederum den Vorteil zur Folge hat, dass auf dem Obermaterialteil des Bekleidungsstücks kein oder nur geringer Kantenabdruck entsteht. Ein weiterer Vorteil ist das sich so ergebende schmalere Nahtbild im Vergleich zur Abdichtung mit einem separaten Nahtband, welches zur randseitigen Befestigung an den Materialbahnen vergleichsweise breit ausgeführt werden muss.

Zur Herstellung einer Nahtverbindungsstruktur gemäß der Erfindung wird zunächst eine erste Materialbahn mit einer ersten Barrierelage und mit einem ersten Rand an einer äußeren Begrenzung der ersten Materialbahn bereitgestellt. Weiterhin wird eine zweite Materialbahn mit einer zweiten Barrierelage und mit einem zweiten Rand und einer äußeren Begrenzung der zweiten Materialbahn vorgesehen. Eine erste Seite der ersten Materialbahn wird auf eine erste Seite der zweiten Materialbahn derart gelegt, dass der zweite Rand der zweiten Materialbahn über den ersten Rand der ersten Materialbahn hinausragt. Zur Verbindung beider Materialbahnen wird wenigstens eine Naht in einem Nahtbereich gebildet, so dass eine erste Nahtzugabe zwischen der Naht und dem ersten Rand der ersten Materialbahn und eine zweite Nahtzugabe zwischen der Naht und dem zweiten Rand der zweiten Materialbahn gebildet wird. Die zweite Nahtzugabe wird um den ersten Rand der ersten Materialbahn umgelegt, so dass die zweite Nahtzugabe die wenigstens eine Naht unter Bildung einer Nahtabdeckung bedeckt, wobei die Nahtabdeckung im Nahtbereich an der ersten Materialbahn befestigt wird.

Insbesondere können nach dem Schritt des Bildens der wenigstens einen Naht als eine erste Naht die folgenden Schritte ausgeführt werden:
Nach Bilden der ersten Naht zur Verbindung beider Materialbahnen in dem Nahtbereich wird ein Teil der zweiten Materialbahn, der an den Nahtbereich angrenzt, auf eine der ersten Materialbahn abgewandte Seite umgeschlagen. Nachfolgend wird eine zweite Naht gebildet, die parallel zur ersten Naht sowie zwischen der ersten Naht und dem ersten Rand der ersten Materialbahn angeordnet ist, wobei diese zweite Naht die erste Materialbahn, die zweite Materialbahn sowie den umgeschlagenen Teil der zweiten Materialbahn verbindet. Danach wird die zweite Nahtzugabe um den ersten Rand der ersten Materialbahn umgelegt, so dass die zweite Nahtzugabe die erste und zweite Naht unter Bildung der Nahtabdeckung bedeckt, wobei diese Nahtabdeckung im Nahtbereich an der ersten Materialbahn befestigt wird.

Gemäß einer Ausführungsform der Erfindung wird die Nahtabdeckung im Nahtbereich direkt an der ersten Materialbahn befestigt, so dass sich auf diese Weise eine effektive wasserdichte Abdeckung der ersten bzw. zweiten Naht ergibt. Insbesondere wird die Nahtabdeckung im Nahtbereich direkt an der ersten Nahtzugabe der ersten Materialbahn befestigt.

Die Erfindung ist insbesondere in dem Fall vorteilhaft anwendbar, wenn wenigstens eine der ersten und zweiten Naht eine Nähnaht umfasst bzw. eine solche Nähnaht bildet, wodurch eine vergleichsweise hohe Reissfestigkeit der Nahtverbindungsstruktur erreicht werden kann. Andererseits wird durch die Nahtabdeckung eine effektive Abdichtung der Nahtverbindungsstelle erreicht, ohne dass hierzu ein separates Nahtband verwendet werden muss.

In einer weiteren Ausführungsform der Erfindung wird die Nahtabdeckung im Nahtbereich flüssigkeitsdicht an der ersten Materialbahn befestigt. Insbesondere wird hierzu die Nahtabdeckung im Nahtbereich kontinuierlich mit der ersten Materialbahn mittels eines Klebstoffs verbunden, der eine flüssigkeitsdichte Abdichtung an der Verbindungsstelle schafft. Ein solcher Klebstoff kann beispielsweise ein Klebstoff aus der Gruppe der Silikone sein. Mit dieser Maßnahme wird die Abdichtung der Nahtstelle weiter verbessert, wobei unter Verwendung eines entsprechend flexiblen Klebers dennoch eine relativ weiche Naht geschaffen werden kann.

In ähnlicher Weise wird gemäß einer Weiterbildung der umgeschlagene Teil der zweiten Materialbahn im Nahtbereich flüssigkeitsdicht an einem nicht umgeschlagenen Teil der zweiten Materialbahn befestigt. Insbesondere wird der umgeschlagene Teil der zweiten Materialbahn im Nahtbereich kontinuierlich mit dem nicht umgeschlagenen Teil der zweiten Materialbahn mittels eines Klebstoffs verbunden, der eine flüssigkeitsdichte Abdichtung an der Verbindungsstelle schafft. Auch dieser Klebstoff kann beispielsweise ein Klebstoff aus der Gruppe der Silikone sein.

Eine so geschaffene Nahtverbindungsstruktur kann beispielsweise Teil eines Bekleidungsstücks sein, bei dem wenigstens eine erste Materialbahn mit einer zweiten Materialbahn über eine Nahtverbindungsstruktur miteinander verbunden sind. Das Bekleidungsstück kann beispielsweise ein Oberbekleidungsstück sein wie beispielsweise eine Jacke, eine Hose, ein Hemd, eine Bluse, ein Mantel, ein Overall oder dergleichen, oder kann Teil eines Huts, eines Handschuhs oder eines Schuhwerks sein.

Dank der erfindungsgemäßen Nahtverbindungsstruktur kann ein Bekleidungsstück hergestellt werden, das reversibel umdrehbar ist (Wendejacke), so dass ein Obermaterialteil des Bekleidungsstücks als ein Innenmaterialteil verwendbar ist und umgekehrt, da die Nahtverbindungsstruktur grundsätzlich von beiden Seiten aus wasserdicht gestaltet werden kann. Die Nahtverbindungsstruktur kann so ausgestaltet werden, dass es keinen Farb- bzw. Materialunterschied mehr zwischen Nahtstelle und Obermaterialteil bzw. Innenmaterialteil gibt. An dieser Stelle wirkt sich auch das vergleichsweise dünne Nahtbild positiv aus.

Weitere Aus- und Weiterbildungen der Erfindung sind in den Unteransprüchen angegeben.

Die Erfindung wird im folgenden anhand der in der Zeichnung dargestellten Figuren näher erläutert.
- Fig. 1: ist eine schematische, perspektivische Ansicht zweier Materialbahnen, die zur Bildung einer Nahtverbindung übereinandergelegt werden und durch eine Naht miteinander verbunden werden,
- Fig. 2: zeigt eine schematische, perspektivische Ansicht der Nahtverbindungsstruktur in einem nachfolgenden Verarbeitungsschritt,
- Fig. 3: zeigt eine schematische, perspektivische Ansicht der Nahtverbindungsstruktur in einem weiteren Verarbeitungsschritt,
- Fig. 4: zeigt einen Querschnitt durch eine in den vorherigen Verarbeitungsschritten gebildete Nahtverbindungsstruktur,
- Fig. 5: zeigt einen schematischen Querschnitt eines Mehrlagenlaminats, welches als jeweilige Materialbahn gemäß den Figuren 1 bis 3 verwendbar ist,
- Fig. 6: zeigt ein beispielhaftes Bekleidungsstück mit einer erfindungsgemäßen Nahtverbindungsstruktur.

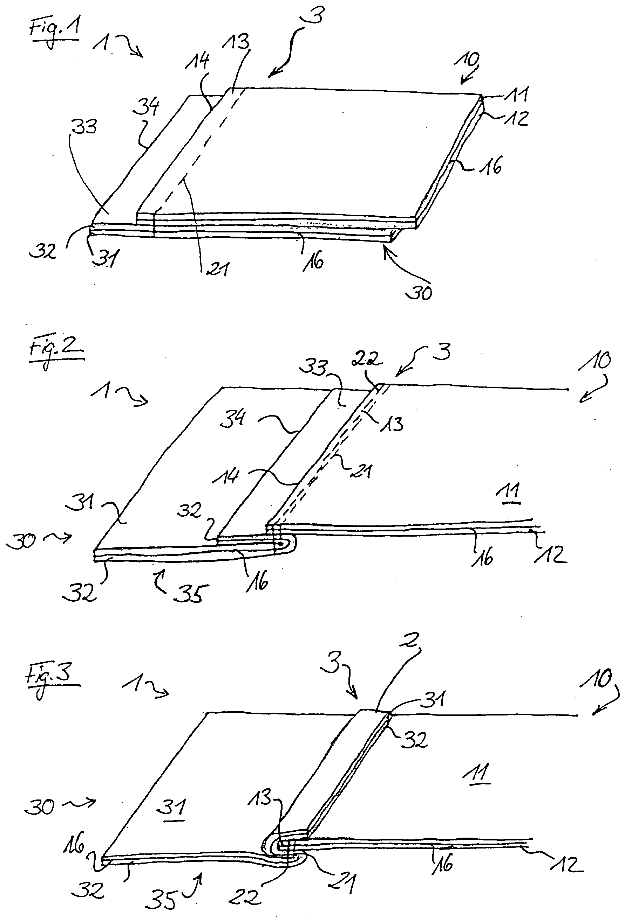

Anhand von Figuren 1 bis 4 soll im folgenden die Herstellung einer beispielhaften Nahtverbindungsstruktur gemäß den Prinzipien der vorliegenden Erfindung näher erläutert werden. In den Figuren 1 bis 4 sind hierzu die verwendeten Materialbahnen nur grob schematisch dargestellt, um die Nahtverbindungsstruktur an sich besser erkennen zu können. Als zu verbindende Materialbahnen sind vielfältige Materialien verwendbar, beispielsweise Mehrschichtlaminate wie etwa ein Zweilagenlaminat mit einer Funktionsschicht oder auch ein Dreilagenlaminat mit einer textilen Schicht wie beispielsweise eine Obermaterialschicht, einer Funktionsschicht und einer Textilschicht. Es ist jedoch zur Herstellung einer im Wesentlichen wasserdichten Nahtverbindung im Prinzip jede Art von Materialbahn geeignet, die zumindest eine Barrierelage aufweist, die beispielsweise zur Herstellung einer Barriereschicht gegenüber eindringendem Wasser dienen kann.

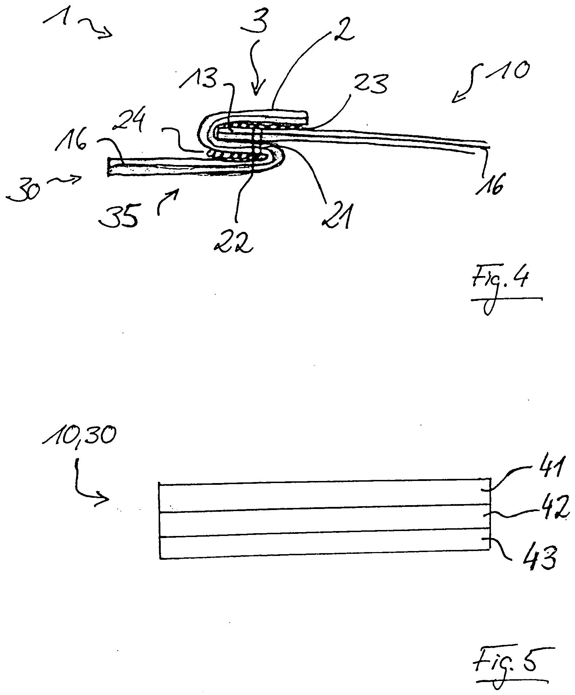

Beispielsweise wird als Materialschicht 10, 30, wie im folgenden anhand der Figuren 1 bis 4 noch näher erläutert, ein Dreilagenlaminat gemäß Fig. 5 verwendet, welches zur Bildung eines wasserdichten und dennoch wasserdampfdurchlässigen und somit atmungsaktiven Bekleidungsstücks geeignet ist. Ein solches Dreilagenlaminat, wie in Fig. 5 dargestellt, weist beispielsweise ein textiles Material 41 wie beispielsweise ein Obermaterial auf, das wasserdampfdurchlässig und auch wasserdurchlässig ist. Auf der Innenseite des Obermaterials 41 ist eine wasserdichte, wasserdampfdurchlässige Barrierelage 42 (Funktionsschicht) angeordnet. Insbesondere weist die wasserdichte, wasserdampfdurchlässige Funktionsschicht 42 eine wasserdichte, wasserdampfdurchlässige Membrane auf, die ihrerseits einlagig oder auch mehrlagig ausgebildet sein kann. Beispielsweise ist die Membrane eine poröse Membrane aus gerecktem PTFE (ePTFE). Beispielsweise ist eine ePTFE-Schicht mit einer wasserdampfdurchlässigen, kontinuierlichen (nicht-porösen) Polyurethan-Schicht versehen. Auch kann die Funktionsschicht im Grundsatz jedes Material enthalten, welches zur Herstellung einer Barrierelage geeignet ist.

Auf der zum Körper des Benutzers des Bekleidungsstücks weisenden Seite der Funktionsschicht 42 ist beispielsweise eine textile Futterschicht 43 angeordnet. Die Textilschichten 41, 43 können beispielsweise Gewebe, Gewirke, Gestricke und/oder ein Vlies enthalten.

Mit einem Mehrlagenlaminat, wie in Fig. 5 dargestellt, lässt sich ein Bekleidungsstück der allgemeinen Art nach, wie oben bereits beschrieben, herstellen, welches wasserdicht und dennoch wasserdampfdurchlässig ist, wobei durch die Wasserdampfdurchlässigkeit der Tragekomfort entsprechend gesteigert wird. Alternativ oder zusätzlich ist es möglich, eine Barrierelage zu verwenden, welche luftdicht (winddicht) und/oder wasserdicht und wasserdampfdurchlässig ist.

Die Barrierelage kann wasserdampfdurchlässig und gasdicht (luftdicht) sein, weiter kann die Barrierelage wasserdampfdurchlässig und flüssigkeitsdicht (wasserdicht) sein, und außerdem kann die Barrierelage wasserdampfdurchlässig, gasdicht und flüssigkeitsdicht sein.

Mit Bezug auf die Figuren 1 bis 4 werden zunächst zwei Materialbahnen 10 und 30 bereitgestellt, die miteinander über eine Naht zu verbinden sind. Die Materialbahn 10 weist eine erste Seite 12 und eine gegenüberliegende zweite Seite wie beispielsweise eine Abseite 11 auf. Beispielsweise ist die erste Seite 12 ein Obermaterialteil, der beim Tragen des Bekleidungsstücks nach außen gewandt ist. Entsprechend bildet die zweite Seite 11 einen Innenmaterialteil des Bekleidungsstücks, der entsprechend zum Träger des Bekleidungsstücks gewandt ist. Bei Verwendung eines Mehrlagenlaminats, wie in Fig. 5 dargestellt, bildet beispielsweise die Textilschicht 41 den Obermaterialteil 12, während die Textilschicht 43 den Innenmaterialteil 11 bildet. Zwischen diesen Textilschichten ist die Barrierelage 42 angeordnet, welche der Übersichtlichkeit halber in Figuren 1 bis 4 nur als schwarze Linie 16 zwischen den Lagen 11 und 12 bzw. 31 und 32 dargestellt ist.

Ebenso weist die Materialbahn 30 in gleicher Weise wie die Materialbahn 10 eine erste Seite 32 in Form eines Obermaterialteils und eine Abseite 31 in Form eines Innenmaterialteils auf.

Die ersten Seiten 12, 32 (rechten Seiten) der Materialbahnen 10, 30 werden aufeinandergelegt, so dass ein zweiter Rand 34 der zweiten Materialbahn 30, der sich an einer äußeren Begrenzung derselben befindet, über einen ersten Rand 14 an einer äußeren Begrenzung der ersten Materialbahn 10 hinausragt. Mit anderen Worten werden die beiden Materialbahnen 10, 30 mit ihren rechten Seiten nicht konform aufeinandergelegt, sondern derart, dass ein schmaler überstehender Streifen der Materialbahn 30 entsteht, wie in Fig. 1 dargestellt. Nachfolgend werden die Materialbahnen 10, 30 unter Bildung einer Naht 21 miteinander vernäht, so dass die beiden Materialbahnen 10, 30 an der Naht 21 reissfest miteinander verbunden sind. Auf diese Art wird eine erste Nahtzugabe 13 zwischen der Naht 21 und dem ersten Rand 14 der ersten Materialbahn 10 sowie eine zweite Nahtzugabe 33 zwischen der Naht 21 und dem zweiten Rand 34 der zweiten Materialbahn 30 gebildet. Beispielsweise beträgt die Breite der zweiten Nahtzugabe 33 wenigstens das Doppelte der Breite der ersten Nahtzugabe 13. Damit sind die Materialbahnen 10, 30 im so gebildeten Nahtbereich 3 unter Bildung unterschiedlicher Nahtzugaben 13, 33 miteinander verbunden.

Zum nachfolgenden Verbinden der zwei Textillaminate in Form der Materialbahnen 10, 30 kann es vorteilhaft sein, wenn die Textilschichten des Obermaterialteils und Innenmaterialteils an der äußeren Begrenzung der jeweiligen Materialbahn abgeschärft werden. Damit wird erreicht, dass der Klebstoff einfacher bis zur Barrierelage vordringen und abdichtend in die Struktur der Barrierelage eindringen kann. Beispielsweise wird der Obermaterialteil 32 der unteren Materialbahn 30 in einer Breite von etwa 13 mm abgeschärft, während die Abseite 11 der oberen Materialbahn 10 mit einer Breite von etwa 7 mm abgeschärft wird. Insbesondere kommt nach dem Abschärfen und Aufeinanderlegen der Materialbahnen die Kante 14 der Materialbahn 10 am inneren Ende der abgeschärften Fläche der Materialbahn 30 zu liegen, so dass die abgeschärfte Fläche der Materialbahn 30 gleichzeitig den schmalen überstehenden Streifen, wie in Fig. 1 dargestellt, bildet. Die Naht 21 wird dann in der abgeschärften Fläche der Materialbahn 10 beispielsweise mit einem Abstand von 2 mm zum innenseitigen Ende der abgeschärften Fläche gebildet.

Mit Bezug auf Fig. 2 wird ein Teil 35 der zweiten Materialbahn 30, der an den Nahtbereich 3 angrenzt, auf eine der ersten Materialbahn 10 abgewandte Seite umgeschlagen. Dadurch weist der Obermaterialteil 32 der Materialbahn 30 nach außen, während die Abseite bzw. der Innenmaterialteil 31 konform zum Innenmaterialteil 11 der Materialbahn 10 nach innen gerichtet ist. Der umgeschlagene Teil 35 wird im Nahtbereich 3 unter Bildung einer zweiten Naht 22 mit der ersten Materialbahn 10 und dem nicht umgeschlagenen Teil der zweiten Materialbahn 30 vernäht, so dass die zweite Naht 22 die Materialbahn 10 sowohl mit dem umgeschlagenen Teil als auch dem nicht umgeschlagenen Teil der zweiten Materialbahn 30 verbindet. Hierbei ist die Naht 22 parallel zur ersten Naht 21 sowie zwischen dieser ersten Naht 21 und dem Rand 14 der Materialbahn 10 angeordnet.

Für das Bilden der Naht 22, beispielsweise in Form eines Steppstichs, wird das Muster umgedreht. Die Nahtzugabe wird dann auf die nicht abgeschärfte Seite geklappt, so dass der abgeschärfte Bereich weiterhin sichtbar bleibt. Die Steppnaht wird nun beispielsweise 1 mm von der Stoßkante 14 in den Bereich gesetzt, in welchen die Nahtzugabe geklappt wurde.

Nachfolgend wird eine Kleberspur auf die Nahtzugabe 33 der Materialbahn 30 aufgebracht. Prinzipiell können, neben einem verwendeten Silikonkleber, alle Klebersysteme verwendet werden, welche sich in diesem Fertigungsschritt verarbeiten lassen. Beispielsweise können Kleber aus der Gruppe der Silikone, Polyurethane oder PVC eingesetzt werden. Die genauen Parameter hängen dabei vom jeweils verwendeten Mehrschichtlaminat und vom Klebesystem ab.

Die zweite Nahtzugabe 33 wird nun um den ersten Rand 14 der ersten Materialbahn 10 gelegt, so dass die Nahtzugabe 33 der Materialbahn 30 sowohl die Naht 21 als auch die Naht 22 unter Bildung einer Nahtabdeckung 2 bedeckt. Die Befestigung erfolgt beispielsweise mit Hilfe einer Heizpresse oder eines sonstigen geeigneten Geräts, welches die Nahtzugabe 33 im Nahtbereich 3 mit der Materialbahn 10 verpresst, wobei der Klebstoff danach ausgehärtet wird. Das Aushärten muss hierbei nicht zwangsläufig über eine erhöhte Temperatur erfolgen, sondern hängt vom verwendeten Klebersystem ab. Das Aushärten könnte auch chemisch oder über andere Anregungsverfahren (z. B. Ultraschall, UV IR etc.) erfolgen.

Um die Nähte 21 und 22 flüssigkeitsdicht bzw. wasserdicht auszubilden, wird nun eine schmale Kleberlinie in die verbleibende offene Kante zwischen dem umgeklappten Teil 35 der Materialbahn 30 und dem nicht umgeklappten Teil der Materialbahn 30 im Nahtbereich 3 gebracht. Dies ist anhand von Fig. 4 verdeutlicht, wobei an dieser Stelle ein Klebstoff 24 in einer schmalen Kleberlinie beispielsweise mit einer Pipette aufgebracht wird. In Fig. 4 ist auch der im vorherigen Verarbeitungsschritt aufgebrachte Klebstoff 23 verdeutlicht, der zur Befestigung der Nahtabdeckung 2 bzw. der Nahtzugabe 33 an der Materialbahn 10 verwendet wird. Die Kleberlinie 24 wird nochmals mit einer Heizpresse oder eines sonstigen geeigneten Gerätes verpresst und ausgehärtet.

Allgemein kann die Befestigung der Nahtabdeckung 2 flüssigkeitsdicht und/oder gasdicht erfolgen, wobei die Nahtabdeckung insbesondere mit einem flüssigkeitsdichten Material wie beispielsweise Klebstoff 23, 24, wie beschrieben, abgedichtet wird.

Auf diese Art wird eine Nahtverbindungsstruktur geschaffen, bei der kein separates Nahtband zur Abdichtung der Verbindungsnaht 21 mehr benötigt wird. Dadurch ergibt sich der Vorteil, dass es keinen Farb- bzw. Materialunterschied mehr zwischen Nahtbändern und Abseitenmaterial gibt. Weiterhin sind die Nähte schmäler und weicher ausgebildet als eine vergleichbare Naht mit separatem Nahtband. Außerdem ergibt sich der Vorteil, dass keine bzw. stark reduzierte, sichtbare Kantenabdrücke auf der Oberware entstehen.

Zum Verpressen und Aushärten des Silikonklebers 23, 24 kann beispielsweise ein Druck von 2,5 bar, eine Temperatur von 150°C mit jeweils 20 Sekunden Einwirkzeit herangezogen werden. Die Nähte 21, 22 können mit einer handelsüblichen Nähmaschine beispielsweise im Geradstich ausgeführt werden. Als Klebstoff kann ein Silikonklebesystem RT601 der Firma Wacker/Burghausen verwendet werden. Für das Abschärfen der jeweiligen Kanten, wie oben beschrieben, kann eine Abschärfmaschine verwendet werden.

Statt einer Nähnaht für die Nähte 21, 22 kann auch im Grundsatz eine Schweißnaht oder eine Klebenaht vorgesehen werden.

Eine hohe Wasserdichtigkeit an der Nahtabdeckung 2 lässt sich erzielen, indem die Nahtabdeckung 2 im Nahtbereich 3 direkt an der ersten Materialbahn 10 beispielsweise mittels Klebstoff 23 befestigt ist, das heißt unmittelbar an der Materialbahn 10 befestigt ist. Hierbei ist die Nahtabdeckung 2 außerdem direkt bzw. unmittelbar an der ersten Nahtzugabe 13 der ersten Materialbahn 10 befestigt, so dass die Übergangsstelle zwischen erster und zweiter Materialbahn gut abgedichtet ist. Mit Hilfe von kontinuierlichen, flüssigkeitsdichten Klebstoffen 23, 24 lässt sich eine flüssigkeitsdichte Abdichtung sowohl an der Verbindungsstelle als auch am umgeschlagenen Teil der Materialbahn 30 im Nahtbereich 3 erzielen.

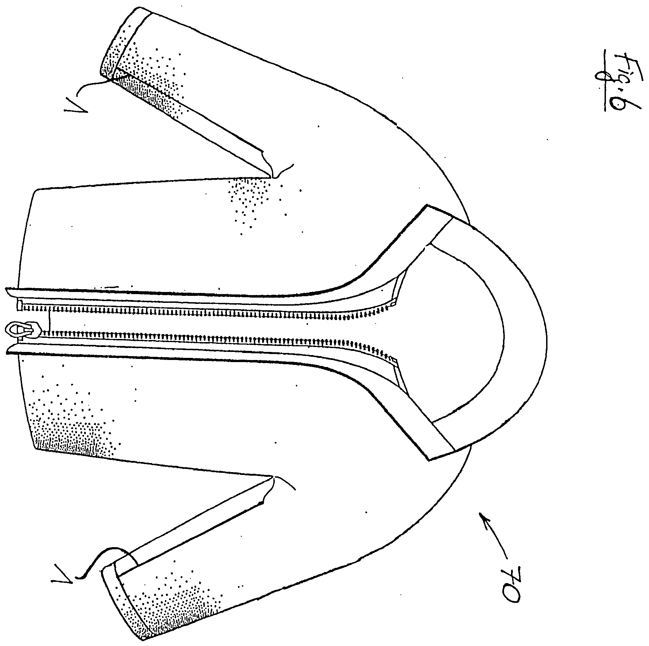

Eine so gebildete Nahtverbindungsstruktur ist vorteilhaft einsetzbar in einem Bekleidungsstück. Fig. 6 zeigt ein beispielhaftes Bekleidungsstück 70 mit einer erfindungsgemäßen Nahtverbindungsstruktur 1. Das Bekleidungsstück ist bevorzugt reversibel umdrehbar, so dass Innenmaterialteil bzw. das Obermaterialteil des Bekleidungsstücks wechselweise innen oder außen getragen werden können. Entsprechend sind die Materialbahnen 10, 30 gemäß Figuren 1 bis 4 reversibel umdrehbar ausgestaltet, so dass der jeweilige Obermaterialteil 12, 32 als ein jeweiliger Innenmaterialteil des Bekleidungsstücks verwendbar ist, und umgekehrt der jeweilige Innenmaterialteil 11, 31 als ein jeweiliger Obermaterialteil des Bekleidungsstücks verwendbar ist. Da die Naht nach beiden Seiten hin flüssigkeitsdicht ausgebildet ist, ist ein Bekleidungsstück mit einer derartigen Nahtverbindungsstruktur reversibel einsetzbar.

Geeignete Materialien für die wasserdichte, wasserdampfdurchlässige Funktionsschicht (vgl. Funktionsschicht 42 gemäß Fig. 5) sind insbesondere Polyurethan, Polypropylen und Polyester, einschließlich Polyetherester und deren Laminate, wie sie in den Druckschriften US-A-4,725,418 und US-A-4,493,870 beschrieben sind. Besonders bevorzugt wird jedoch gerecktes mikroporöses Polytetrafluorethylen (ePTFE), wie es beispielsweise in den Druckschriften US-A-3,953,566 sowie US-A-4,187,390 beschrieben ist, und gerecktes Polytetrafluorethylen, welches mit hydrophilen Imprägniermitteln und/oder hydrophilen Schichten versehen ist; siehe beispielsweise die Druckschrift US-A-4,194,041. Unter einer mikroporösen Funktionsschicht wird eine Funktionsschicht verstanden, deren durchschnittliche Porengröße zwischen etwa 0,2 *µ*m und etwa 0,3 *µ*m liegt.

Die Porengröße kann mit dem Coulter Porometer (Markenname) gemessen werden, das von der Coulter Electronics, Inc., Hialeath, Florida, USA, hergestellt wird.

Als "wasserdicht" wird eine Funktionsschicht angesehen, gegebenenfalls einschließlich an der Funktionsschicht vorgesehener Nähte, wenn sie einen Wassereingangsdruck von mindestens 1x10⁴ Pa gewährleistet. Vorzugsweise gewährleistet das Funktionsschichtmaterial einen Wassereingangsdruck von über 1x10⁵ Pa. Dabei ist der Wassereingangsdruck nach einem Testverfahren zu messen, bei dem destilliertes Wasser bei 20±2°C auf eine Probe von 100 cm² der Funktionsschicht mit ansteigendem Druck aufgebracht wird. Der Druckanstieg des Wassers beträgt 60±3 cm Ws je Minute. Der Wassereingangsdruck entspricht dann dem Druck, bei dem erstmals Wasser auf der anderen Seite der Probe erscheint. Details der Vorge hensweise sind in der ISO-Norm 0811 aus dem Jahre 1981 vorgegeben.

Als "wasserdampfdurchlässig" wird eine Funktionsschicht dann angesehen, wenn sie eine Wasserdampfdurchlässigkeitszahl Ret von unter 150 m²×Pa×W⁻¹ aufweist. Die Wasserdampfdurchlässigkeit wird nach dem Hohenstein-Hautmodell getestet. Diese Testmethode wird in der DIN EN 31092 (02/94) bzw. ISO 11092 (1993) beschrieben.

Der Begriff "luftdicht (winddicht)" bedeutet, dass die Barrierelage oder die Materialbahn 10 in Kombination mit der Barrierelage eine Luftdurchlässigkeit von weniger als 25 l/m²/s, in manchen Ausführungsformen von weniger als 5 l/m²/s aufweist.

### Luftdurchlässigkeit:

Um die Luftdurchlässigkeit einer Materialbahn (Textil) zu messen, wird eine Testvorrichtung verwendet, welche den Luftfluss bzw. -strom durch die Materialbahn messen kann. Die Testexemplare werden zwischen zwei Ringen platziert, was in einem Testbereich von 100 cm² resultiert. Luft wird durch das Testexemplar mit einem konstanten Druck von 100 Pa gesaugt. Dabei wird die Luftmenge, die durch das Testexemplar hindurch tritt, gemessen und in l/m²/s berechnet. Das Testverfahren ist in EN ISO 9237 beschrieben.

### Beispiel

Ein 3-Lagen-Laminat wird zur Herstellung der Nahtverbindungsstruktur zur Verfügung gestellt. Das 3-Lagen-Laminat ist ein kommerziell verfügbares Produkt der W.L.Gore & Associates GmbH; Putzbrunn, Deutschland unter der Bezeichnung Gore Liquid Proof Gown Fabric. Dieses Laminat hat eine erste textile Lage aus Polyester mit einem Flächengewicht von 65 g/m² und eine zweite textile Lage aus Polyester mit einem Flächengewicht von 50 g/m². Zwischen den beiden textilen Lagen ist eine poröse Membrane gerecktes PTFE (ePTFE) aufweisend angeordnet. Das Laminat hat ein Flächengewicht von 170 g/m² und eine Dicke von ungefähr 310-330 *µ*m.

Zwei Bahnen dieses 3-Lagen-Laminates wurden miteinander verbunden unter Ausbildung der erfindungsgemäßen Nahtverbindungsstruktur. Gemäß der Erfindung wurden die erste Naht und die zweite Naht mittels einer handelsüblichen Nähmaschine genäht. Die Nahtabdeckung 2 liegt mit einer Breite von ungefähr 10-15 mm vor. Im Vergleich weisen herkömmliche Nahtbänder eine Nahtbreite zwischen 22-23 mm auf. Zur flüssigkeitsdichten Abdichtung der Nahtabdeckung 2 mit der ersten Materialbahn 10 als auch des umgeschlagenen Teils 35 der zweiten Materialbahn 30 wird ein Silikonklebstoff TRV 601 der Firma Wacker Chemie AG verwendet.

Die Naht ist wasserdicht bei einem Druck von 0,2 bar für 2 min, bestimmt nach der ISO 811 (1981).

### Weitere Ausführungsformen

Im Folgenden sind weitere Ausführungsformen beschrieben. In einer Ausführungsform weist die zweite Nahtzugabe (33) eine Breite auf, die wenigstens das Doppelte der Breite der ersten Nahtzugabe (13) beträgt.

In einer weiteren Ausführungsform weist wenigstens eine der ersten und zweiten Barrierelage eine wasserdichte, wasserdampfdurchlässige Membrane (42) auf. Es ist auch möglich, dass die erste und zweite Barrierelage jeweils eine wasserdichte Funktionsschicht (42) aufweisen, wobei die wasserdichte Funktionsschichteine wasserdichte, wasserdampfdurchlässige Membrane (42) aufweist.

In einer weiteren Ausführungsform ist wenigstens eine der textilen Lagen (41, 43) wenigstens in einem Bereich innerhalb der ersten Nahtzugabe (13) bzw. der zweiten Nahtzugabe (33) entfernt.

In einer anderen Ausführungsform umfasst ein Verfahren zur Herstellung einer Nahtverbindungsstruktur (1) die Schritte:
- Bereitstellen einer ersten Materialbahn (10) mit einer ersten Barrierelage (42) und mit einem ersten Rand (14) an einer äußeren Begrenzung der ersten Materialbahn (10),
- Bereitstellen einer zweiten Materialbahn (30) mit einer zweiten Barrierelage (42) und mit einem zweiten Rand (34) an einer äußeren Begrenzung der zweiten Materialbahn (30),
- Legen einer ersten Seite (12) der ersten Materialbahn (10) auf eine erste Seite (32) der zweiten Materialbahn (30) derart, dass der zweite Rand (34) der zweiten Materialbahn (30) über den ersten Rand (14) der ersten Materialbahn (10) hinausragt,
- Bilden wenigstens einer Naht (21) zur Verbindung beider Materialbahnen (10, 30) in einem Nahtbereich (3) unter Bildung einer ersten Nahtzugabe (13) zwischen der Naht (21) und dem ersten Rand (14) und einer zweiten Nahtzugabe (33) zwischen der Naht (21) und dem zweiten Rand (34),
- Umlegen der zweiten Nahtzugabe (33) um den ersten Rand (14) der ersten Materialbahn (10), so dass die zweite Nahtzugabe (33) die wenigstens eine Naht (21) unter Bildung einer Nahtabdeckung (2) bedeckt,
- Befestigen der Nahtabdeckung (2) im Nahtbereich (3) an der ersten Materialbahn (10).

Dabei kann die Nahtabdeckung (2) im Nahtbereich (3) direkt an der ersten Nahtzugabe (13) der ersten Materialbahn (10) befestigt werden.

Es ist auch möglich, dass die wenigstens eine Naht (21) als eine erste Naht gebildet wird, und nach Bilden der ersten Naht (21) die folgenden Schritte ausgeführt werden:
- Umschlagen eines Teils (35) der zweiten Materialbahn (30), der an den Nahtbereich (3) angrenzt, auf eine der ersten Materialbahn (10) abgewandte Seite,
- Bilden einer zweiten Naht (22), die parallel zur ersten Naht (21) sowie zwischen der ersten Naht (21) und dem ersten Rand (14) der ersten Materialbahn (10) angeordnet ist, wobei die zweite Naht (22) die erste Materialbahn (10), die zweite Materialbahn (30) sowie den umgeschlagenen Teil (35) der zweiten Materialbahn verbindet,
- Umlegen der zweiten Nahtzugabe (33) um den ersten Rand (14) der ersten Materialbahn (10), so dass die zweite Nahtzugabe (33) die erste und zweite Naht (21, 22) unter Bildung einer Nahtabdeckung (2) bedeckt,
- Befestigen der Nahtabdeckung (2) im Nahtbereich (3) an der ersten Materialbahn (10).

In einer weiteren Ausführungsform wird die wenigstens eine Naht (21) durch Nähen gebildet.

Es ist auch möglich, dass wenigstens eine der ersten und zweiten Naht (21, 22) durch Nähen gebildet wird.

In einer weiteren Ausführungsform ist das Verfahren so ausgebildet, dass die Befestigung der Nahtabdeckung (2) mindestens flüssigkeitsdicht und/oder gasdicht erfolgt, insbesondere mit einem mindestens flüssigkeitsdichten Material (23, 24) abgedichtet wird.

## Patentansprüche

1. Nahtverbindungsstruktur (1), umfassend:
- eine erste Materialbahn (10) mit einer ersten Barrierelage (42) und mit einem ersten Rand (14) an einer äußeren Begrenzung der ersten Materialbahn (10),
- eine zweite Materialbahn (30) mit einer zweiten Barrierelage (42) und mit einem zweiten Rand (34) an einer äußeren Begrenzung der zweiten Materialbahn (30),
- wenigstens eine Naht (21), welche in einem Nahtbereich (3) die erste und zweite Materialbahn (10, 30) verbindet, unter Bildung einer ersten Nahtzugabe (13) zwischen der Naht (21) und dem ersten Rand (14) der ersten Materialbahn (10) und unter Bildung einer zweiten Nahtzugabe (33) zwischen der Naht (21) und dem zweiten Rand (34) der zweiten Materialbahn (30), **dadurch gekennzeichnet,**
- **dass** die erste und zweite Materialbahn (10, 30) in dem Nahtbereich (3) übereinander angeordnet sind und die zweite Nahtzugabe (33) um den ersten Rand (14) der ersten Materialbahn (10) gefaltet ist und die wenigstens eine Naht (21) unter Bildung einer Nahtabdeckung (2) bedeckt,
- und **dass** die Nahtabdeckung (2) im Nahtbereich (3) mit der ersten Materialbahn (10) verbunden ist.

2. Nahtverbindungsstruktur nach Anspruch 1, wobei
die Nahtabdeckung (2) im Nahtbereich (3) direkt an der ersten Materialbahn (10) befestigt ist.

3. Nahtverbindungsstruktur nach Anspruch 1, wobei
die Nahtabdeckung (2) im Nahtbereich (3) direkt an der ersten Nahtzugabe (13) der ersten Materialbahn (10) befestigt ist.

4. Nahtverbindungsstruktur nach Anspruch 1, wobei
- die wenigstens eine Naht (21) eine erste Naht ist und
- die Nahtverbindungsstruktur außerdem eine zweite Naht (22) umfasst, die parallel zur ersten Naht (21) sowie zwischen der ersten Naht (21) und dem ersten Rand (14) der ersten Materialbahn (10) angeordnet ist,
- wobei die zweite Naht (22) die erste Materialbahn (10), die zweite Materialbahn (30) sowie einen umgeschlagenen Teil (35) der zweiten Materialbahn (30) auf einer der Nahtabdeckung (2) abgewandten Seite verbindet.

5. Nahtverbindungsstruktur nach Anspruch 4, wobei
die zweite Nahtzugabe (33) die erste und zweite Naht (21, 22) unter Bildung der Nahtabdeckung (2) bedeckt.

6. Nahtverbindungsstruktur nach Anspruch 4, wobei
wenigstens eine der ersten und zweiten Naht (21, 22) eine Nähnaht umfasst.

7. Nahtverbindungsstruktur nach Anspruch 4, wobei
der umgeschlagene Teil (35) der zweiten Materialbahn (30) im Nahtbereich (3) flüssigkeitsdicht an einem nicht umgeschlagenen Teil der zweiten Materialbahn (30) befestigt ist.

8. Nahtverbindungsstruktur nach Anspruch 4 oder 7, wobei
der umgeschlagene Teil (35) der zweiten Materialbahn (30) im Nahtbereich (3) kontinuierlich mit einem nicht umgeschlagenen Teil der zweiten Materialbahn (30) mittels eines Klebstoffs (24) verbunden ist, der eine flüssigkeitsdichte Abdichtung an der Verbindungsstelle schafft.

9. Nahtverbindungsstruktur nach Anspruch 1, wobei
die wenigstens eine Naht (21) eine Nähnaht umfasst.

10. Nahtverbindungsstruktur nach Anspruch 1, wobei
die wenigstens eine Naht (21) flüssigkeitsdicht ist.

11. Nahtverbindungsstruktur nach Anspruch 1 oder 7, wobei
die Nahtabdeckung (2) im Nahtbereich (3) flüssigkeitsdicht an der ersten Materialbahn (10) befestigt ist.

12. Nahtverbindungsstruktur nach Anspruch 1 oder 7, wobei
die Nahtabdeckung (2) im Nahtbereich (3) kontinuierlich mit der ersten Materialbahn (10) mittels eines Klebstoffs (23) verbunden ist, der eine flüssigkeitsdichte Abdichtung an der Verbindungsstelle schafft.

13. Nahtverbindungsstruktur nach Anspruch 8 oder 12, wobei
der Klebstoff (23, 24) ein Klebstoff aus der Gruppe der Silikone ist.

14. Nahtverbindungsstruktur nach Anspruch 1, wobei
die erste und zweite Barrierelage jeweils eine wasserdichte Funktionsschicht (42) aufweisen.

15. Nahtverbindungsstruktur nach Anspruch 1, wobei
wenigstens eine der ersten und zweiten Barrierelage (42) wasserdampfdurchlässig und gasdicht, insbesondere luftundurchlässig, oder wasserdampfdurchlässig und flüssigkeitsdicht, insbesondere wasserdicht, oder wasserdampfdurchlässig, gasdicht und flüssigkeitsdicht ist.

16. Nahtverbindungsstruktur nach Anspruch 1, wobei
die erste Materialbahn (10) ein Laminat mit wenigstens einer textilen Lage (41, 43) aufweist, welche auf der ersten Barrierelage (42) angeordnet ist, und die zweite Materialbahn (30) ein Laminat mit wenigstens einer textilen Lage (41, 43) aufweist, welche auf der zweiten Barrierelage (42) angeordnet ist.

17. Nahtverbindungsstruktur nach Anspruch 1, wobei
die wenigstens eine Naht (21) wenigstens eine aus der Gruppe umfassend eine Einfachkapp-Doppelnaht, eine Klebenaht und eine Schweißnaht umfasst.

18. Nahtverbindungsstruktur nach Anspruch 1, wobei
- die erste Materialbahn (10) eine erste Seite (12) und eine gegenüberliegende Abseite (11) aufweist,
- die zweite Materialbahn (30) eine erste Seite (32) und eine gegenüberliegende Abseite (31) aufweist,
- wobei im Nahtbereich (3) die jeweiligen ersten Seiten (12, 32) der ersten und zweiten Materialbahn (10, 30) aneinander stoßen und durch die wenigstens eine Naht (21) in dem Nahtbereich (3) verbunden sind,
- wobei die zweite Nahtzugabe (33) um den ersten Rand (14) der ersten Materialbahn (10) gefaltet ist, so dass die erste Seite (32) der zweiten Materialbahn (30) an die wenigstens eine Naht (21) unter Bildung der Nahtabdeckung (2) angrenzt und im Nahtbereich (3) mit der Abseite (11) der ersten Materialbahn (10) verbunden ist.

19. Nahtverbindungsstruktur nach Anspruch 1, wobei
die Nahtverbindungsstruktur wasserdicht ist bei einem Wassereintrittsdruck von 0,2 bar für 2 min gemessen nach ISO 811 (1981).

20. Nahtverbindungsstruktur nach Anspruch 1, wobei
die wenigstens eine Naht (21) gasdicht ausgebildet ist.

21. Bekleidungsstück (70) mit wenigstens einer ersten Materialbahn (10) und zweiten Materialbahn (30), und mit einer Nahtverbindungsstruktur (1) nach Anspruch 1 zur Verbindung der ersten Materialbahn (10) und zweiten Materialbahn (30).

22. Bekleidungsstück nach Anspruch 21, wobei
die erste und zweite Materialbahn (10, 30) samt Nahtverbindungsstruktur (1) reversibel umdrehbar sind, so dass ein jeweiliger Obermaterialteil (12, 32) der ersten und zweiten Materialbahn (10, 30) als ein jeweiliger Innenmaterialteil des Bekleidungsstücks (70) verwendbar ist, und ein jeweiliger Innenmaterialteil (11, 31) der ersten und zweiten Materialbahn (10, 30) als ein jeweiliger Obermaterialteil des Bekleidungsstücks verwendbar ist.

## Claims

1. A seam-joining structure (1), comprising:
- a first material web (10) with a first barrier layer (42) and with a first edge (14) on an outer boundary of the first material web (10),
- a second material web (30) with a second barrier layer (42) and with a second edge (34) on an outer boundary of the second material web (30),
- at least one seam (21) that joins the first and second material webs (10, 30) in a seam area (3) so as to form a first seam allowance (13) between the seam (21) and the first edge (14) of the first material web (10), and so as to form a second seam allowance (33) between the seam (21) and the second edge (34) of the second material web (30), ch
aracterized in that the first and second material webs (10, 30) are arranged one above the other in the seam area (3) and the second seam allowance (33) is folded around the first edge (14) of the first material web (10) and covers the at least one seam (21) so as to form a seam cover (2),
- and that the seam cover (2) is joined to the first material web (10) in the seam area (3).

2. A seam-joining structure according to claim 1,
wherein the seam cover (2) is attached directly to the first material web (10) in the seam area (3).

3. A seam-joining structure according to claim 1,
wherein the seam cover (2) is attached directly to the first seam allowance (13) of the first material web (10) in the seam area (3).

4. A seam-joining structure according to claim 1,
wherein
- the at least one seam (21) is a first seam and
- the seam-joining structure comprises furthermore a second seam (22) arranged parallel to the first seam (21) and situated between the first seam (21) and the first edge (14) of the first material web (10),
- wherein the second seam (22) joins the first material web (10), the second material web (30) as well as a folded part (35) of the second material web (30), on a side facing away from seam cover (2).

5. A seam-joining structure according to claim 4,
wherein the second seam allowance (33) covers the first and second seams (21, 22) so as to form the seam cover (2).

6. A seam-joining structure according to claim 4,
wherein at least one of the first and second seams (21, 22) comprises a sewing seam.

7. A seam-joining structure according to claim 4,
wherein the folded part (35) of the second material web (30) is attached in liquid-tight manner in the seam area (3) to an unfolded part of the second material web (30).

8. A seam-joining structure according to claim 4 or 7,
wherein the folded part (35) of the second material web (30), in the seam area (3), is joined continuously to a non-folded part of the second material web (30) by means of a glue (24) that creates a liquid-tight seal at the joining site.

9. A seam-joining structure according to claim 1,
wherein the at least one seam (21) comprises a sewing seam.

10. A seam-joining structure according to claim 1,
wherein the at least one seam (21) is liquid-tight.

11. A seam-joining structure according to claim 1 or 7,
wherein the seam cover (2) is attached in liquid-tight manner to the first material web (10) in seam area (3).

12. A seam-joining structure according to claim 1 or 7,
wherein the seam cover (2) is joined continuously to the first material web (10) in seam area (3) by means of a glue (23) which creates a liquid-tight seal at the joining site.

13. A seam-joining structure according to claim 8 or 12,
wherein the glue (23, 24) is a glue from the silicone group.

14. A seam-joining structure according to claim 1,
wherein the first and second barrier layers each have a waterproof functional layer (42).

15. A seam-joining structure according to claim 1,
wherein at least one of the first and second barrier layers (42) is water-vapor-permeable and gastight, in particular air-impermeable, or water-vapor-permeable and liquid-tight, in particular waterproof, or water-vapor-permeable, gastight and liquid-tight.

16. A seam-joining structure according to claim 1,
wherein the first material web (10) comprises a laminate with at least one textile layer (41, 43) arranged on the first barrier layer (42), and the second material web (30) comprises a laminate with at least one textile layer (41, 43) arranged on the second barrier layer (42).

17. A seam-joining structure according to claim 1,
wherein the at least one seam (21) comprises at least one of the group comprising a single-cap-double-seam, a glue seam and a welding seam.

18. A seam-joining structure according to claim 1,
wherein
- the first material web (10) has a first side (12) and an opposite back side (11),
- the second material web (30) has a first side (32) and an opposite back side (31),
- wherein the respective first sides (12, 32) of the first and second material webs (10, 30) abut each other in the seam area (3) and are joined in the seam area (3) by the at least one seam (21),
- wherein the second seam allowance (33) is folded around the first edge (14) of the first material web (10), so that the first side (32) of the second material web (30) is adjacent to the at least one seam (21) so as to form a seam cover (2), and is joined in seam area (3) to the back side (11) of the first material web (10).

19. A seam-joining structure according to claim 1,
wherein the seam-joining structure is waterproof at a water entry pressure of 0.2 bar for 2 minutes, measured according to ISO 811 (1981).

20. A seam-joining structure according to claim 1,
wherein the at least one seam (21) is designed gastight.

21. A clothing article (70) comprising at least a first material web (10) and a second material web (30) as well as a seam-joining structure (1) according to claim 1 for joining the first material web (10) and the second material web (30).

22. A clothing article according to claim 21,
wherein the first and second material webs (10, 30), along with the seam-joining structure (1), are reversible, so that a respective outer material part (12, 32) of the first and second material webs (10, 30) can be used as a respective inner material part of the clothing article (70) and a respective inner material part (11, 31) of the first and second material webs (10, 30) can be used as a respective outer material part of the clothing article.

## Revendications

1. Structure de liaison par jonction (1) comprenant :
- une première bande de tissu (10) comprenant une première couche (42) faisant office de barrière et comprenant un premier bord (14) à une délimitation externe de la première bande de tissu (10) ;
- une deuxième bande de tissu (30) comprenant une deuxième couche (42) faisant office de barrière et comprenant un deuxième bord (34) à une délimitation externe de la deuxième bande de tissu (30) ;
- au moins une jonction (21) qui relie, dans une zone de jonction (3), la première et la deuxième bande de tissu (10, 30) en formant une première jonction attenante (13) entre la jonction (21) et le premier bord (14) de la première bande de tissu (10) et en formant une deuxième jonction attenante (33) entre la jonction (21) et le deuxième bord (34) de la deuxième bande de tissu (30) ; **caractérisée en ce que** la première et la deuxième bande de tissu (10, 30) sont disposées en superposition réciproque dans la zone de jonction (3) et la deuxième jonction attenante (33) est repliée autour du premier bord (14) de la première bande de tissu (10) et recouvre ladite au moins une jonction (21) en formant un recouvrement de jonction (2) ; et **en ce que** le recouvrement de jonction (2) est relié, dans la zone de jonction (3), à la première bande de tissu (10).

2. Structure de liaison par jonction selon la revendication 1, dans laquelle le recouvrement de jonction (2) est fixé, dans la zone de jonction (3), directement à la première bande de tissu (10).

3. Structure de liaison par jonction selon la revendication 1, dans laquelle le recouvrement de jonction (2) est fixé, dans la zone de jonction (3), directement à la première jonction attenante (13) de la première bande de tissu (10).

4. Structure de liaison par jonction selon la revendication 1, dans laquelle
- ladite au moins une jonction (21) représente une première jonction ; et
- la structure de liaison par jonction comprend en outre une deuxième jonction (22) qui est disposée parallèlement à la première jonction (21) et entre la première jonction (21) et le premier bord (14) de la première bande de tissu (10) ;
- dans laquelle la deuxième jonction (22) relie la première bande de tissu (10), la deuxième bande de tissu (30), ainsi qu'une partie rabattue (35) de la deuxième bande de tissu (30) sur un côté qui se détourne du recouvrement de jonction (2).

5. Structure de liaison par jonction selon la revendication 4, dans laquelle la deuxième jonction attenante (33) recouvre la première et la deuxième jonction (21, 22) en formant le recouvrement de jonction (2).

6. Structure de liaison par jonction selon la revendication 4, dans laquelle au moins une jonction choisie parmi la première et la deuxième jonction (21, 22) comprend une jonction obtenue par couture.

7. Structure de liaison par jonction selon la revendication 4, dans laquelle la partie rabattue (35) de la deuxième bande de tissu (30) est fixée de manière étanche aux liquides dans la zone de jonction (3) à une partie non rabattue de la deuxième bande de tissu (30).

8. Structure de liaison par jonction selon la revendication 4 ou 7, dans laquelle la partie rabattue (35) de la deuxième bande de tissu (30) est reliée dans la zone de jonction (3) en continu à une partie non rabattue de la deuxième bande de tissu (30) au moyen d'un adhésif (24) qui confère une étanchéité aux liquides à l'endroit de liaison.

9. Structure de liaison par jonction selon la revendication 1, dans laquelle ladite au moins une jonction (21) comprend une jonction obtenue par couture.

10. Structure de liaison par jonction selon la revendication 1, dans laquelle ladite au moins une jonction (21) est étanche aux liquides.

11. Structure de liaison par jonction selon la revendication 1 ou 7, dans laquelle le recouvrement de jonction (2) est fixé dans la zone de jonction (3) d'une manière étanche aux liquides à la première bande de tissu (10).

12. Structure de liaison par jonction selon la revendication 1 ou 7, dans laquelle le recouvrement de jonction (2) est relié dans la zone de jonction (3) en continu à la première bande de tissu (10) au moyen d'un adhésif (23) qui confère une étanchéité aux liquides à l'endroit de liaison.

13. Structure de liaison par jonction selon la revendication 8 ou 12, dans laquelle l'adhésif (23, 24) représente un adhésif choisi parmi le groupe des silicones.

14. Structure de liaison par jonction selon la revendication 1, dans laquelle la première et la deuxième couche faisant office de barrière présentent respectivement une couche fonctionnelle (42) étanche à l'eau.

15. Structure de liaison par jonction selon la revendication 1, dans laquelle au moins une couche choisie parmi la première et la deuxième couche (42) faisant office de barrière est perméable à la vapeur d'eau et étanche aux gaz, en particulier imperméable à l'air, ou perméable à la vapeur d'eau et étanche aux liquides, en particulier étanche à l'eau, ou perméable à la vapeur d'eau, étanche aux gaz et étanche aux liquides.

16. Structure de liaison par jonction selon la revendication 1, dans laquelle la première bande de tissu (10) présente un stratifié comprenant au moins une couche textile (41, 43) qui est disposée sur la première couche (42) faisant office de barrière, et la deuxième bande de tissu (30) présente un stratifié comprenant au moins une couche textile (41, 43) qui est disposée sur la deuxième couche (42) faisant office de barrière.

17. Structure de liaison par jonction selon la revendication 1, dans laquelle ladite au moins une jonction (21) comprend au moins une jonction choisie parmi le groupe comprenant une double jonction à nappe unique, une jonction par collage ou une jonction par soudure.

18. Structure de liaison par jonction selon la revendication 1, dans laquelle
- la première bande de tissu (10) présente un premier côté (12) et un côté envers opposé (11) ;
- la deuxième bande de tissu (30) présente un premier côté (32) et un côté envers opposé (31) ;
- dans laquelle, dans la zone de jonction (3), les premiers côtés respectifs (12, 32) de la première et de la deuxième bande de tissu (10, 30) se heurtent l'un l'autre et sont reliés via ladite au moins une jonction (21) dans la zone de jonction (3) ;
- dans laquelle la deuxième jonction attenante (33) est repliée autour du premier bord (14) de la première bande de tissu (10), d'une manière telle que le premier côté (32) de la deuxième bande de tissu (30) vient se disposer en position adjacente à ladite au moins une jonction (21) en formant le recouvrement de jonction (2) et est reliée, dans la zone de jonction (3), au côté envers (11) de la première bande de tissu (10).

19. Structure de liaison par jonction selon la revendication 1, dans laquelle la structure de liaison par jonction est étanche à l'eau sous une pression d'entrée d'eau de 0,2 bar pendant 2 minutes, mesurée conformément à la norme ISO 811 (1981).

20. Structure de liaison par jonction selon la revendication 1, dans laquelle ladite au moins une jonction (21) est réalisée pour être étanche aux gaz.

21. Article vestimentaire (70) comprenant au moins une première bande de tissu (10) et une deuxième bande de tissu (30) et comprenant une structure de liaison par jonction (1) selon la revendication 1 pour la liaison de la première bande de tissu (10) et de la deuxième bande de tissu (30).

22. Article vestimentaire selon la revendication 21, dans lequel la première et la deuxième bande de tissu (10, 30) ensemble avec la structure de liaison par jonction (1) peuvent être retournées de façon réversible, d'une manière telle qu'une partie de tissu supérieure respective (12, 32) de la première et de la deuxième bande de tissu (10, 30) peut être utilisée comme partie de tissu interne respective de l'article vestimentaire (70) et une partie de tissu interne respective (11, 31) de la première et de la deuxième bande de tissu (10, 30) peut être utilisée comme partie de tissu supérieure respective de l'article vestimentaire.
